# EUROPÄISCHE PATENTANMELDUNG

(11) **EP 2 624 428 A1**
(43) Veröffentlichungstag der Anmeldung: **07.08.2013**
(21) Anmeldenummer: 12153980.3
(22) Anmeldetag: 06.02.2012
(51) Int. Cl.: H02M 3/335, H02M 3/158

(54) **Modulare DC Stromversorgung mit unabhängigen Ausgangswandlern**

(71) Anmelder: Siemens Aktiengesellschaft, 80333 München (DE)
(72) Erfinder: Augesky, Christian, 1100 Wien (AT)

(57) **Zusammenfassung**

Die Erfindung betrifft eine Stromversorgung mit einem DC-DC-Wandler (2) und einem Schaltwandler (1), wobei ein Zwischenkreis (3) mit einer Zwischenkreisspannung vorgesehen ist, wobei der Zwischenkreis (3) über den DC-DC-Wandler (2) an eine Versorgungsspannung anschließbar ist und wobei an dem Zwischenkreis (3) zumindest ein Ausgangsschaltregler (11, 12, 13, 1n, 14, 15, 16, 1m) angeschlossen ist, welcher ausgangsseitig eine geregelte Ausgangsspannung (Out1, Out2, Out3, Outn, Out4, Out5, Out6, Outm) liefert. Eine Regelung der Zwischenkreisspannung findet nicht statt. Stattdessen ergibt sich die Zwischenkreisspannung aus der mittels DC-DC-Wandler (2) zugeführten und der mittels Ausgangsschaltregler (11, 12, 13, 1n, 14, 15, 16, 1m) entnommenen Energie.

## Beschreibung

Die Erfindung betrifft eine Stromversorgung mit einem DC-DC-Wandler und einem Schaltwandler.

Nach dem Stand der Technik kennt man zweistufige Stromversorgungen, welche die Vorteile zweier Wandlerkonzepte nutzen. Dabei wird eine eingangsseitige Versorgungsspannung auf eine weitgehend konstante Zwischenkreisspannung geregelt. Dies geschieht mit einem Abwärtsschaltregler und/oder einem Aufwärtsschaltregler. An diese Zwischenkreisspannung ist ein verlustarmer DC-DC-Wandler mit einem fixen Übertragungsverhältnis angeschlossen. Die erste Stufe regelt die Zwischenkreisspannung in der Weise, dass ausgangsseitige die gewünschte Ausgangsspannung anliegt.

Für Anwendungen, die eine abgesicherte Ausgangsspannung erfordern, werden einer solchen Standardstromversorgung elektronische Sicherungen nachgeschaltet. Solche Sicherungen begrenzen im Überlastfall den Strom und schalten im Überlastbetrieb nach einer gewissen Zeit ab, um Bauteilschäden infolge übermäßiger Erwärmung zu vermeiden.

Solche Sicherungen sind vor allem dann sinnvoll, wenn die Stromversorgung mehrere Lastzweige versorgt. Eine Störung in einem Lastzweig führt dann gegebenenfalls zum Abschalten dieses Zweigs, ohne dass die anderen Lastzweige ebenfalls abgeschaltet werden müssen.

Den Vorteilen, die eine solche Anordnung mit sich bringt, stehen mehrere Nachteile gegenüber. Zunächst ist damit ein erhöhter Geräteaufwand verbunden, mit entsprechendem Platzbedarf in einem Schaltschrank. Hinzu kommt der Verkabelungsaufwand. Ein wesentlicher Nachteil der bekannten Lösung besteht auch in der zusätzlichen Verlustleistung sowie in der begrenzten Dauer, während der die Stromversorgung im Überlastbetrieb mit Strombegrenzung betrieben werden kann. Der Erfindung liegt die Aufgabe zugrunde, für eine Stromversorgung der eingangs genannten Art eine Verbesserung gegenüber dem Stand der Technik anzugeben.

Erfindungsgemäß wird diese Aufgabe gelöst durch die Merkmale des Anspruchs 1 und des Anspruchs 20. Verbesserungen sind in den abhängigen Ansprüchen angegeben.

Dabei ist ein Zwischenkreis mit einer Zwischenkreisspannung vorgesehen, wobei der Zwischenkreis über den DC-DC-Wandler an eine Versorgungsspannung anschließbar ist und wobei an dem Zwischenkreis zumindest ein Ausgangsschaltregler angeschlossen ist, welcher ausgangsseitig eine geregelte Ausgangsspannung liefert. Mit dieser Anordnung ist eine Regelung der Zwischenkreisspannung ist nicht erforderlich. Stattdessen ergibt sich die Zwischenkreisspannung aus der mittels DC-DC-Wandler zugeführten und der mittels Ausgangsschaltregler entnommenen Energie. Die Regelung der Ausgangsspannung übernimmt der Ausgangsschaltregler ausgehend vom momentanen Zwischenkreisspannungsniveau.

In einer zweckmäßigen Weiterbildung ist der DC-DC-Wandler mittels einer Steuerung angesteuert und der Steuerung ist ein Messwert der momentanen Zwischenkreisspannung zugeführt, um die Zwischenkreisspannung auf einen vorgegebenen unteren Wert und auf einen vorgegebenen oberen Wert zu begrenzen. Die Ansteuerung des DC-DC-Wandlers erfolgt dann in der Weise, dass die Zwischenkreisspannung immer in einem Bereich gehalten wird, der für den nachgeschalteten Ausgangsschaltregler als eingangsseitiger Betriebsspannungsbereich günstig ist.

Zudem ist es von Vorteil, wenn der Ausgangsschaltregler eine Stromregelung umfasst, welche einen Ausgangsstrom auf einen einstellbaren Maximalwert begrenzt. Mittels Ausgangsschaltregler ist damit auf einfache Weise eine Absicherung gegen Überlasten möglich. Im Überlastfall erfolgt mittels Ausgangsschaltregler eine dauerhafte Begrenzung des Stromes, ohne dass eine Abschaltung notwendig wird. Zudem spart ein solcher Geräteaufbau Platz in einem Schaltschrank, mit weniger Verkabelungsaufwand gegenüber herkömmlichen Absicherungssystemen.

Eine weitere Verbesserung besteht darin, dass dem Ausgangsschaltregler ein Abschaltsignal zugeführt ist, welches nach Überschreitung eines vorgegebenen Ausgangsstromgrenzwertes mit zeitlichem Nachlauf eine Abschaltung des Ausgangsschaltreglers bewirkt. Auf diese Weise ist sichergestellt, dass Bauelemente innerhalb der Stromversorgung infolge einer Überlastung nicht zerstört werden.

In einer Ausführung ist dabei der Ausgangsschaltregler mit einem Zeitglied verbunden ist, welches das Abschaltsignal ausgibt, wenn ein vorgegebener Ausgangsstromgrenzwert für eine vorgegebene Zeitspanne überschritten ist. Das Zeitglied beginnt also zu laufen, sobald der Ausgangsstrom den Ausgangsstromgrenzwert erreicht. Bleibt der Ausgangsstrom während der vorgegebene Zeitspanne über dem Ausgangsstromgrenzwert, wird der betreffende Ausgang der Stromversorgung abgeschaltet.

Eine andere Ausführung sieht vor, dass ein Temperatursensor zur Erfassung einer kritischen Temperatur vorgesehen ist und dass eine Ausgabe des Abschaltsignals erfolgt, wenn ein vorgegebener Ausgangsstromgrenzwert überschritten ist und wenn die kritische Temperatur einen Grenzwert erreicht. Mittels geeigneter Steuerungsmittel werden auf diese Weise eine erfasste Temperatur eines kritischen Bauteils und der Ausgangsstrom auswertet. Sobald der Ausgangsstrom über dem Ausgangsstromgrenzwert steigt, hängt es von der Temperatur des kritischen Bauteils ab, ob eine Abschaltung des betreffenden Ausgangs erfolgt.

Weiters ist es von Vorteil, wenn die Zwischenkreisspannung als Kleinspannung ausgelegt ist. Im europäischen Wirtschaftsraum ist damit eine Spannung bis 60V festgelegt. Mit der Festlegung auf einen Kleinspannungskreis ist einerseits eine hohe Sicherheit für das Bedienpersonal gegeben. Beispielsweise können verschiedene Komponenten gefahrlos an den Zwischenkreis angeschlossen oder von diesem getrennt werden. Andererseits ermöglicht die Kleinspannung eine breite Auswahl kostengünstiger Bauteile zur Realisierung des Ausgangsschaltreglers. Anstelle technisch aufwändiger und teuerer Leistungsbauteile können beispielsweise gängige elektronische Bauteile aus dem Unterhaltungselektronik-, Telekom- oder Automotivbereich zum Einsatz kommen. Die vorliegende Topologie ermöglicht zudem eine nahezu durchgängige Ausführung in SMD-Technik und auch die Kühlung der Bauteile ist mit geringem Aufwand durchführbar.

Für einen hohen Gesamtwirkungsgrad ist es günstig, den DC-DC-Wandler als einen Resonanzwandler auszubilden. Ein solcher Wandler weist besonderst geringe Schaltverluste auf.

Bei einem Anschluss an ein öffentliches Stromnetz ist es vorteilhaft, wenn dem DC-DC-Wandler eine sogenannte Power-Factor-Correction-Schaltung (PFC-Schaltung) zum Anschluss an ein Versorgungsnetz vorgeschaltet ist. Auf diese Weise werden störende Oberwellen im Versorgungsnetz vermieden, insbesondere beim Anschluss an ein einphasiges Netz.

Eine vorteilhafte Ausprägung der Erfindung sieht vor, dass an dem Zwischenkreis zumindest zwei Ausgangsschaltregler angeschlossen sind. Es sind dann mittels einer Stromversorgung mehrere Lasten versorgbar, wobei jede Last mittels eigenem Ausgangsschaltregler abgesichert ist. Durch den parallelen Aufbau von mehreren Ausgängen sind die Ströme im Stromversorgungsgerät auf mehrere Leitungen aufgeteilt, wodurch speziell bei Geräten mit 20/40 oder mehr Ampere Leitungsverluste reduziert sind. Zudem sind die Ausgänge parallel zusammenschaltbar, um höhere Lasten zu versorgen. Dabei wird die Begrenzungs- und Abschaltfunktion der einzelnen Ausgangsschaltregler mit gegenseitiger Entkopplung realisiert.

Die Verwendung von kostengünstigen Kleinspannungsbauteilen führt dazu, dass auch bei mehreren Ausgangsschaltreglern die Gerätegesamtkosten nicht höher sind als bei herkömmlichen Gerätelösungen.

Eine Variante sieht vor, dass die zumindest zwei Ausgangsschaltregler eine gemeinsame Ausgangsspannungsregelung aufweisen. Sinnvollerweise geschieht dies bei Anwendungen mit zwei Lasten, welche die gleiche Versorgungsspannung benötigen, oder wenn die Ausgänge parallel geschaltet sind.

In einer anderen Variante wird der Vorteil genutzt, dass die Ausgangsspannungen der einzelnen Ausgangsschaltregler unabhängig voneinander einstellbar sind. Dabei weist jeder Ausgangsschaltregler eine eigene Ausgangsspannungsregelung mit unterschiedlichen Soll-Ausgangsspannungen auf. Damit sind auch Leitungsverluste, welche zwischen der Stromversorgung und einer Last auftreten, auf einfache Weise ausgleichbar.

Sinnvollerweise werden mehrere Ausgangsschaltregler mittels einer gemeinsamen Steuereinheit angesteuert. Dabei ist es günstig, wenn die gemeinsame Steuereinheit eine Schnittstelle zur Kommunikation mit einem Bussystem umfasst, um Meldedaten zu senden und/oder Steuerdaten zu empfangen. Das steigert die Flexibilität bei Einsatz der Stromversorgung.

Vorteilhafterweise ist der Steuereinheit als Parameter eine momentane Belastung des DC-DC-Wandler zugeführt und die Steuereinheit steuert die Ausgangsschaltregler in Abhängigkeit dieses Parameters an. Wenn der DC-DC-Wandler an seine Belastungsgrenze stößt, wird mittels Steuereinheit die übertragene Leistung der Ausgangsschaltregler reduziert. Somit ist die fortdauernde Versorgung angeschlossener Lasten sichergestellt.

Dabei ist es günstig, wenn für die Ansteuerung der Ausgangsschaltregler eine Priorisierung vorgesehen ist. Bei drohender Überlastung des DC-DC-Wandlers werden zuerst die Ausgangsschaltregler zurückgefahren oder abgeschaltet, an deren Ausgänge unkritische Lasten angeschlossen sind. Solche Lasten, die beispielsweise für die Verfügbarkeit einer Industrieanlage unerlässlich sind, beleiben weiter versorgt.

Von Vorteil ist es zudem, wenn die Stromversorgung ein Basisgerät mit einem Gehäuse umfasst, wobei das Gehäuse Kontakte aufweist, an welchen die Zwischenkreisspannung anliegt, sodass mittels dieser Kontakte ein Erweiterungsmodul mit zumindest einem weiteren Ausgangsschaltregler an das Basisgerät anschließbar ist. Auch diese Maßnahme erhöht die Möglichkeiten beim Einsatz der Stromversorgung.

Dabei ist es günstig, wenn das Basisgerät eine eigene Steuereinheit umfasst, wobei am Gehäuse des Basisgeräts eine Schnittstelle vorgesehen ist, mittels der eine Steuereinheit des Erweiterungsmoduls mit der Steuereinheit des Basismoduls verbindbar ist. Die Steuerung im Basisgerät fungiert als Master, beispielsweise zur Vorgabe von Sollwerten. Auch die Kommunikation mit externen Melde- und Steuerungseinrichtungen erfolgt mittels dieser Mastersteuerung. Im Erweiterungsmodul ist die Steuereinheit zur eigentlichen Ausgangsspannungsreglung vorgesehen.

Ein besonders verlustarmes Gesamtkonzept sieht vor, dass der jeweilige Ausgangsschaltregler als Abwärtsschaltregler ausgebildet ist.

Ein erfindungsgemäßes Verfahren sieht vor, dass einer Steuerung zur Ansteuerung des DC-DC-Wandlers ein oberer und ein unterer Wert für die Zwischenkreisspannung vorgegeben wird und dass einer Steuerung zur Ansteuerung des Ausgangsschaltreglers ein Sollausgangsspannungswert vorgegeben wird. Die Zwischenkreisspannung wird dann durch geeignete Ansteuerung des DC-DC-Wandlers innerhalb des oberen und unteren Werts gehalten, wodurch ein günstiger Betriebsspannungsbereich für nachgeschaltete Ausgangsschaltregler festgelegt ist.

Vorteilhaft ist es zudem, wenn dem Ausgangsschaltregler ein Ausgangsstromgrenzwert vorgegeben wird und wenn bei einem Ausgangsstromwert größer dem Ausgangsstromgrenzwert der Ausgangsstrom auf diesen Ausgangsstromgrenzwert begrenzt wird. Eine Last wird auf diese Weise mit der maximal möglichen Dauerleistung weiterversorgt. Wenn beispielsweise aufgrund besonderer Betriebsbedingungen mehrere Lasten gleichzeitig aktiv sind, führt dies nicht zum Ausfall der Stromversorgung.

Gegebenfalls ist vorgesehen, dass dem Ausgangsschaltregler ein Überstromgrenzwert vorgegeben wird, welcher ein Vielfaches des Ausgangsstromgrenzwertes beträgt und dass vor einer Begrenzung auf den Ausgangsstromgrenzwert bei Erreichung des Überstromgrenzwertes der Ausgangsstrom so lange auf diesen Überstromgrenzwert begrenzt wird, bis eine kritische Temperatur innerhalb der Stromversorgung einen Grenzwert erreicht oder bis eine vorgegebene Zeitspanne abgelaufen ist. Beispielsweise benötigen manche Sicherungen einen Auslösestrom, der ein Vielfaches des Nennstromes beträgt (z.B. dreifacher Nennstrom). Durch das Zulassen eines solchen Überstromes für eine kurze Zeitspanne (10-25ms) ist es möglich, solche Sicherungen auszulösen, ohne Bauteile der Stromversorgung zu beschädigen.

Weiters ist es sinnvoll, wenn der Ausgangsschaltregler jedenfalls nach einer bestimmten Zeitspanne im Begrenzungsbetrieb abgeschaltet wird. Der Ausgangsstrom ist dann auf einen Ausgangsstromgrenzwert begrenzbar, der für einen Dauerbetrieb zu hoch wäre. Für die vorgegebene Zeitspanne ist jedoch ein solcher Begrenzungsbetrieb durchführbar, ohne dass Bauteile der Stromversorgung Schaden nehmen.

Die Erfindung wird nachfolgend in beispielhafter Weise unter Bezugnahme auf die beigefügten Figuren erläutert. Es zeigen in schematischer Darstellung:
- Fig. 1: Stromversorgung nach dem Stand der Technik
- Fig. 2: Stromversorgung mit einer erfindungsgemäßer Topologie
- Fig. 3: Stromversorgung mit Basisgerät und Erweiterungsmodul

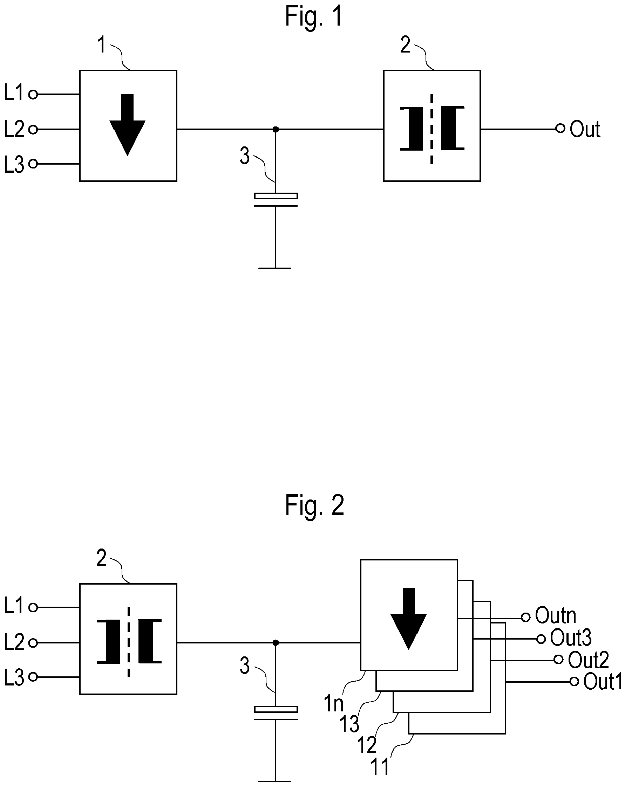

Eine herkömmliche Stromversorgung umfasst einen Abwärtsschaltregler 1, der beispielsweise an ein dreiphasiges Versorgungsnetz L1, L2, L3 angeschlossen ist (Fig. 1). Am Ausgang des Abwärtsschaltreglers 1 ist ein Zwischenkreis 3 mit einem Zwischenkreiskondensator vorgesehen. Ein DC-DC-Wandler 2 setzt in weiterer Folge eine Zwischenkreisspannung in eine Ausgangsspannung um. Die Regelung der Ausgangsspannung erfolgt dabei mittels Abwärtsschaltregler 1, weil der DC-DC-Wandler 2 ein fixes Übersetzungsverhältnis aufweist. Die Zwischenkreisspannung ist somit auf einen bestimmten Wert festgelegt, welcher von der gewünschten Ausgangsspannung und vom Übersetzungsverhältnis des DC-DC-Wandlers abhängt.

Dem gegenüber ist erfindungsgemäß ein Zwischenkreis 3 ohne festgelegter Zwischenkreisspannung vorgesehen (Fig. 2). An einem Zwischenkreiskondensator liegt eine Spannung an, die sich aus der eingangsseitig zugeführten und der ausgangsseitig entnommenen Energie ergibt. Eingangsseitig wird aus einem Versorgungsnetz L1, L2, L3 mittels eines DC-DC-Wandlers 2 Energie in den Zwischenkreis 3 geladen. In Fig. 2 liegen am Zwischenkreis 3 beispielsweise vier Ausgangsschaltregler 11, 12, 13, 1n an, welche dem Zwischenkreis 3 Energie entnehmen und an angeschlossene Lasten abgeben. Der DC-DC-Wandler 2 ist zum Beispiel als LLC-Resonanzwandler ausgebildet.

Gegebenenfalls sind einer Steuerung des DC-DC-Wandlers 2 ein oberer und ein unterer Begrenzungswert für die Zwischenkreisspannung vorgegeben und ein Messwert der momentanen Zwischenkreisspannung zugeführt. Eine Spannungsregelung des Zwischenkreises 3 greift dann ein, sobald die Zwischenkreisspannung einen Begrenzungswert erreicht.

Jeder Ausgangsschaltregler ist günstigerweise als Abwärtsschaltregler ausgebildet. Abwärtsschaltregler weisen insbesondere dann einen hohen Wirkungsgrad auf, wenn die Niveauunterschiede zwischen Eingangs- und Ausgangsspannung nur wenig abweichen, beispielsweise lediglich um den Faktor zwei. Bei einer im Industriebereich üblichen Ausgangsspannung von 24 Volt bewegt sich die Zwischenkreisspannung vorteilhafterweise zwischen 30 und 60 Volt.

Die Topologie erlaubt die unabhängige Einstellung der Spannung und des maximalen Stromes an jedem Ausgang. Jeder Abwärtsschaltregler 11, 12, 13, 1n begrenzt dabei im Störungsfall den Strom auf den maximalen Wert, ohne dass die anderen Ausgänge davon betroffen sind. Trotzt eines fehlerhafter Lastzweigs werden die anderen Lastzweige weiterhin versorgt.

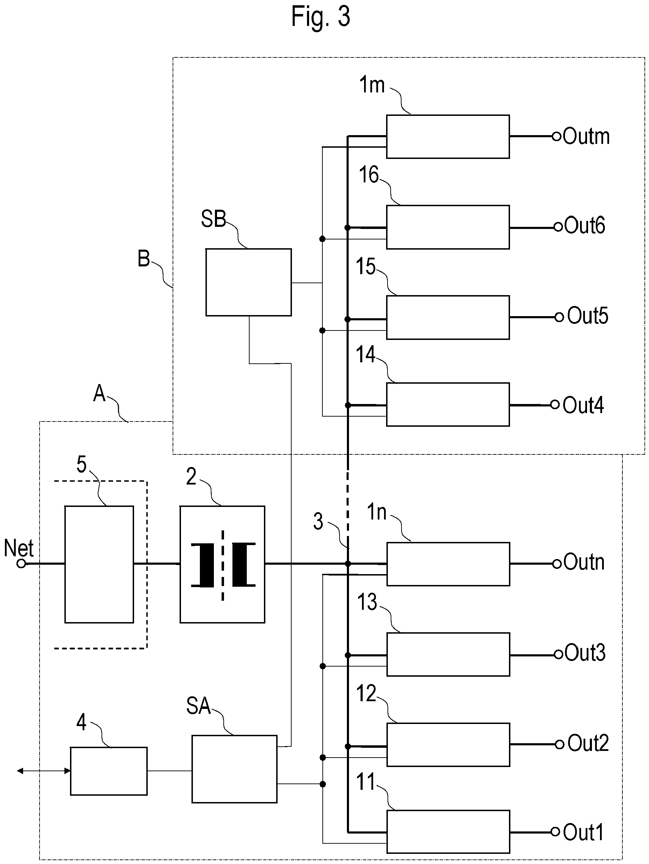

In vielen Anwendungen kann es vorkommen, dass die entnommene Energie der versorgten Lasten dauerhaft niedriger ist als die zur Verfügung stehende Gesamtleistung der Stromversorgung. Beispielsweise sind an zwei Ausgänge unterschiedliche Verbraucher angeschlossen, die niemals gleichzeitig aktiv sind. Die vom DC-DC-Wandler 2 übertragbare Energie ist dann mittels eines Erweiterungsmoduls B nutzbar, wie in Fig. 3 dargestellt.

Ein Basisgerät A umfasst den DC-DC-Wandler 2, welcher zum Beispiel über eine PFC-Schaltung 5 an ein einphasiges Versorgungsnetz Net angeschlossen ist. Ausgangsseitig ist der DC-DC-Wandler 2 mit vier Ausgangsschaltreglern 11, 12, 13, In des Basisgeräts A verbunden. Angesteuert werden die Ausgangsschaltregler 11, 12, 13, 1n mittels einer Steuereinheit SA, welche als Master eingerichtet ist. Optional ist diese Steuereinheit SA über eine geeignete Schnittstelle 4 mit externen Komponenten verbunden. Zum Beispiel ist eine Anbindung an ein Profinet vorgesehen.

Jeder Ausgangsschaltregler 11, 12, 13, In liefert an seinem Ausgang eine geregelte Ausgangsspannung Out1, Out2, Out3, Outn.

Der Zwischenkreis 3 und die Steuereinheit SA weisen Kontakte auf, an die das Erweiterungsmodul B angeschlossen ist. Das Erweiterungsmodul B umfasst vier weitere Ausgangsschaltregler 14, 15, 16, 1m, welche mit einer gemeinsamen Steuerung SB verbunden sind. An jedem Ausgangsschaltregler 14, 15, 16, 1m, liegt eine geregelte Ausgangsspannung Out4, Out5, Out6, Outm an.

Die Steuereinheit SB des Erweiterungsmoduls B ist als Slave eingerichtet und kommuniziert mit der Steuereinheit SA des Basisgeräts A. Die Mastersteuereinheit SA im Basisgerät A übernimmt das Lastmanagement. Beispielsweise sind Szenarien für Abschaltvorgänge vorgesehen, wenn die Summe der von den Ausgangsschaltreglern 11, 12, 13, 1n, 14, 15, 16, 1m entnommenen Energie die Leistung des DC-DC-Wandlers 2 übersteigt.

In einfacheren Ausführungen kann die Kommunikation zwischen der Steuereinheit SA des Basisgeräts A und der Steuereinheit SB eines Erweiterungsmoduls B entfallen.

Eine von der vorliegenden Erfindung umfasste Variante sieht vor, dass der Zwischenkreis 3 an eine weitere Versorgung angeschaltet ist. Dazu ist entweder der Zwischenkreis 3 direkt mit einer zuschaltbaren Energiequelle verbunden oder es ist ein weiterer DC-DC-Wandler zum Anschluss an eine weitere Versorgungsquelle angeordnet, zum Beispiel in einem eigenen anschließbaren Modul. Die Anschaltung an eine zusätzliche Versorgung ist insbesondere dann unproblematisch, wenn die Zwischenkreisspannung als Kleinspannung ausgelegt ist.

## Patentansprüche

1. Stromversorgung mit einem DC-DC-Wandler (2) und einem Schaltwandler (1), **dadurch gekennzeichnet, dass** ein Zwischenkreis (3) mit einer Zwischenkreisspannung vorgesehen ist, dass der Zwischenkreis (3) über den DC-DC-Wandler (2) an eine Versorgungsspannung anschließbar ist und dass an dem Zwischenkreis (3) zumindest ein Ausgangsschaltregler (11, 12, 13, 1n, 14, 15, 16, 1m) angeschlossen ist, welcher ausgangsseitig eine geregelte Ausgangsspannung (Out1, Out2, Out3, Outn, Out4, Out5, Out6, Outm) liefert.

2. Stromversorgung nach Anspruch 1, **dadurch gekennzeichnet, dass** der DC-DC-Wandler (2) mittels einer Steuerung angesteuert ist und dass dieser Steuerung ein Messwert der momentanen Zwischenkreisspannung zugeführt ist, um die Zwischenkreisspannung auf einen vorgegebenen unteren Wert und auf einen vorgegebenen oberen Wert zu begrenzen.

3. Stromversorgung nach Anspruch 1 oder 2, **dadurch gekennzeichnet, dass** der Ausgangsschaltregler (11, 12, 13, 1n, 14, 15, 16, 1m) eine Stromregelung umfasst, welche einen Ausgangsstrom auf einen einstellbaren Maximalwert begrenzt.

4. Stromversorgung nach einem der Ansprüche 1 bis 3, **dadurch gekennzeichnet, dass** dem Ausgangsschaltregler (11, 12, 13, 1n, 14, 15, 16, 1m) ein Abschaltsignal zugeführt ist, welches nach Überschreitung eines vorgegebenen Ausgangsstromgrenzwertes mit zeitlichem Nachlauf eine Abschaltung des Ausgangsschaltreglers (11, 12, 13, 1n, 14, 15, 16, 1m) bewirkt.

5. Stromversorgung nach Anspruch 4, **dadurch gekennzeichnet, dass** der Ausgangsschaltregler (11, 12, 13, 1n, 14, 15, 16, 1m) mit einem Zeitglied verbunden ist, welches das Abschaltsignal ausgibt, wenn ein vorgegebener Ausgangsstromgrenzwert für eine vorgegebene Zeitspanne überschritten ist.

6. Stromversorgung nach Anspruch 4, **dadurch gekennzeichnet, dass** ein Temperatursensor zur Erfassung einer kritischen Temperatur vorgesehen ist und dass eine Ausgabe des Abschaltsignals erfolgt, wenn ein vorgegebener Ausgangsstromgrenzwert überschritten ist und wenn die kritische Temperatur einen Grenzwert erreicht.

7. Stromversorgung nach einem der Ansprüche 1 bis 6, **dadurch gekennzeichnet, dass** die Zwischenkreisspannung als Kleinspannung ausgelegt ist.

8. Stromversorgung nach einem der Ansprüche 1 bis 7, **dadurch gekennzeichnet, dass** der DC-DC-Wandler (2) als Resonanzwandler ausgebildet ist.

9. Stromversorgung nach einem der Ansprüche 1 bis 8, **dadurch gekennzeichnet, dass** dem DC-DC-Wandler (2) eine sogenannte Power-Factor-Correction-Schaltung (5) zum Anschluss an ein Versorgungsnetz (Net) vorgeschaltet ist.

10. Stromversorgung nach einem der Ansprüche 1 bis 9, **dadurch gekennzeichnet, dass** an dem Zwischenkreis (3) zumindest zwei Ausgangsschaltregler (11, 12, 13, 1n, 14, 15, 16, 1m) angeschlossen sind.

11. Stromversorgung nach Anspruch 10, **dadurch gekennzeichnet, dass** die zumindest zwei Ausgangsschaltregler (11, 12, 13, 1n, 14, 15, 16, 1m) eine gemeinsame Ausgangsspannungsregelung aufweisen.

12. Stromversorgung nach Anspruch 10, **dadurch gekennzeichnet, dass** jeder Ausgangsschaltregler (11, 12, 13, 1n, 14, 15, 16, 1m) eine eigene Ausgangsspannungsregelung mit unterschiedlichen Soll-Ausgangsspannungen aufweist.

13. Stromversorgung nach einem der Ansprüche 10 bis 12, **dadurch gekennzeichnet, dass** mehrere Ausgangsschaltregler (11, 12, 13, 1n bzw. 14, 15, 16, 1m) mittels einer gemeinsamen Steuereinheit (SA bzw. SB) angesteuert sind.

14. Stromversorgung nach Anspruch 10, **dadurch gekennzeichnet, dass** der Steuereinheit (SA bzw. SB) als Parameter eine momentane Belastung des DC-DC-Wandler (2) zugeführt ist und dass die Steuereinheit (SA bzw. SB) die Ausgangsschaltregler (11, 12, 13, 1n, 14, 15, 16, 1m) in Abhängigkeit dieses Parameters ansteuert.

15. Stromversorgung nach Anspruch 14, **dadurch gekennzeichnet, dass** für die Ansteuerung der Ausgangsschaltregler (11, 12, 13, 1n, 14, 15, 16, 1m) eine Priorisierung vorgesehen ist.

16. Stromversorgung nach einem der Ansprüche 13 bis 15, **dadurch gekennzeichnet, dass** die gemeinsame Steuereinheit (SA) eine Schnittstelle (4) zur Kommunikation mit einem Bussystem umfasst, um Meldedaten zu senden und/oder Steuerdaten zu empfangen.

17. Stromversorgung nach einem der Ansprüche 1 bis 16, **dadurch gekennzeichnet, dass** die Stromversorgung ein Basisgerät (A) mit einem Gehäuse umfasst und dass das Gehäuse Kontakte aufweist, an welchen die Zwischenkreisspannung anliegt, sodass mittels dieser Kontakte ein Erweiterungsmodul (B) mit zumindest einem weiteren Ausgangsschaltregler (14, 15, 16, 1m) an das Basisgerät (A) anschließbar ist.

18. Stromversorgung nach Anspruch 17, **dadurch gekennzeichnet, dass** das Basisgerät (A) eine eigene Steuereinheit (SA) umfasst, dass am Gehäuse des Basisgeräts (A) eine Schnittstelle vorgesehen ist, mittels der eine Steuereinheit (SB) des Erweiterungsmoduls (B) mit der Steuereinheit (SA) des Basismoduls (A) verbindbar ist.

19. Stromversorgung nach einem der Ansprüche 1 bis 18, **dadurch gekennzeichnet, dass** der jeweilige Ausgangsschaltregler (11, 12, 13, 1n, 14, 15, 16, 1m) als Abwärtsschaltregler ausgebildet ist.

20. Verfahren zum Betreiben einer Stromversorgung nach einem der Ansprüche 1 bis 19, **dadurch gekennzeichnet, dass** einer Steuerung zur Ansteuerung des DC-DC-Wandlers (2) ein oberer und ein unterer Wert für die Zwischenkreisspannung vorgegeben wird und dass einer Steuerung zur Ansteuerung des Ausgangsschaltreglers (11, 12, 13, 1n, 14, 15, 16, 1m) ein Sollausgangsspannungswert vorgegeben wird.

21. Verfahren nach Anspruch 20, **dadurch gekennzeichnet, dass** dem Ausgangsschaltregler (11, 12, 13, 1n, 14, 15, 16, 1m) ein Ausgangsstromgrenzwert vorgegeben wird und dass bei einem Ausgangsstromwert größer dem Ausgangsstromgrenzwert der Ausgangsstrom auf diesen maximalen Ausgangsstromgrenzwert begrenzt wird.

22. Verfahren nach Anspruch 20, **dadurch gekennzeichnet, dass** dem Ausgangsschaltregler (11, 12, 13, 1n, 14, 15, 16, 1m) ein Uberstromgrenzwert vorgegeben wird, welcher ein Vielfaches des Ausgangsstromgrenzwertes beträgt und dass vor einer Begrenzung auf den Ausgangsstromgrenzwert bei Erreichung des Überstromgrenzwertes der Ausgangsstrom so lange auf diesen Überstromgrenzwert begrenzt wird, bis eine kritische Temperatur innerhalb der Stromversorgung einen Grenzwert erreicht oder bis eine vorgegebene Zeitspanne abgelaufen ist.

23. Verfahren nach Anspruch 21 oder 22, **dadurch gekennzeichnet, dass** der Ausgangsschaltregler (11, 12, 13, 1n, 14, 15, 16, 1m) nach einer bestimmten Zeitspanne im Begrenzungsbetrieb abgeschaltet wird.
